(19) Europäisches Patentamt / European Patent Office / Office européen des brevets

(11) **EP 3 906 453 B1**

(12) **EUROPÄISCHE PATENTSCHRIFT**

(45) Veröffentlichungstag und Bekanntmachung des Hinweises auf die Patenterteilung:
**11.03.2026   Patentblatt 2026/11**

(21) Anmeldenummer: **20700639.6**

(22) Anmeldetag: **03.01.2020**

(51) Internationale Patentklassifikation (IPC):
**G05G 9/047** *(2006.01)*

(52) Gemeinsame Patentklassifikation (CPC):
**G05G 9/047; B64U 2201/20; G05G 2009/04781**

(86) Internationale Anmeldenummer:
**PCT/EP2020/050107**

(87) Internationale Veröffentlichungsnummer:
**WO 2020/141227 (09.07.2020 Gazette 2020/28)**

(54) **STEUERUNGSVORRICHTUNG ZUM STEUERN VON REALEN ODER VIRTUELLEN FLUGOBJEKTEN**

CONTROL DEVICE FOR CONTROLLING REAL OR VIRTUAL AIRBORNE OBJECTS

DISPOSITIF DE COMMANDE POUR COMMANDER DES OBJETS VOLANTS RÉELS OU VIRTUELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **03.01.2019  DE 102019100056**

(43) Veröffentlichungstag der Anmeldung:
**10.11.2021   Patentblatt 2021/45**

(73) Patentinhaber: **Gernaert, Manuel-René**
**22297 Hamburg (DE)**

(72) Erfinder: **Gernaert, Manuel-René**
**22297 Hamburg (DE)**

(74) Vertreter: **RGTH**
**Patentanwälte PartGmbB**
**Neuer Wall 10**
**20354 Hamburg (DE)**

(56) Entgegenhaltungen:
**EP-A1- 0 383 663        EP-B1- 1 220 992**
**WO-A1-2017/125428    GB-A- 2 184 817**
**US-A1- 2014 008 496    US-A1- 2018 356 907**
**US-B1- 9 898 033**

- **"THARIS: TWO-HANDED, ACTION-REACTION, ISOMETRIC, SYMMETRICAL JOYSTICK", IBM TECHNICAL DISCLOSURE BULLETIN, INTERNATIONAL BUSINESS MACHINES CORP. (THORNWOOD), US, vol. 36, no. 3, 1 March 1993 (1993-03-01), pages 559 - 562, XP000354877, ISSN: 0018-8689**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Steuerungsvorrichtung zum Steuern von unbemannten und/oder bemannten und/oder virtuellen Flugobjekten, insbesondere von realen und/oder virtuellen Multikoptern, wobei eine Bewegung um eine Hochachse, eine Längsachse und eine Querachse des Flugobjekts mittels eines ersten Bedienelements gesteuert wird. Ferner wird eine Veränderung einer Flughöhe und/oder einer Geschwindigkeit und/oder eines Schubs des Flugobjekts mittels eines zweiten Bedienelements gesteuert.

Zum Steuern von unbemannten Flugobjekten, wie zum Beispiel Drohnen beziehungsweise Multikoptern, werden klassische Fernsteuerungen eingesetzt, welche in der Regel zwei nebeneinander und beabstandet zueinander angeordnete Hebel aufweisen. Mittels dieser Hebel kann die Bewegung der Drohne relativ zu deren drei Achsen sowie auch die Veränderung der Flughöhe gesteuert werden. Dabei handelt es sich somit üblicherweise um eine klassische Vier-Kanal-Fernsteuerung, wobei zur Steuerung der Bewegung des Flugobjekts um dessen Hochachse, Querachse und Längsachse drei Kanäle und zur Variierung der Auf- und Ab-Bewegung ein vierter Kanal verwendet werden. Alle vier Kanäle werden bei einer solchen klassischen Fernsteuerung über die zwei Steuerhebel (jeweils zwei Kanäle mittels eines Steuerhebels) angesteuert.

**Stand der Technik**

Im Design DE 402009005121 wird eine klassische Fernsteuerung mit zwei separaten Steuerhebeln gezeigt. Über jeden der beiden Steuerhebel werden jeweils zwei Achsen angesteuert.

In der US 2016/0297522 A1 wird eine klassische Vier-Kanal-Fernsteuerung mit zwei Hebeln zur Steuerung einer Drohne beschrieben, wobei die Fernsteuerung ferner einen Bildschirm zur Darstellung von Bildern beziehungsweise Videos, welche von einer Kamera an der Drohne aufgenommen wurden, aufweist.

In der US 2017/0108857 A1 wird eine weitere Fernsteuerung zur Steuerung von Drohnen beschrieben. Diese Fernsteuerung weist ein berührungsempfindliches Display auf, worüber die Drohne beziehungsweise deren Bewegung um die jeweiligen Achsen gesteuert werden kann. Ferner kann durch die Bewegung der Fernsteuerung selbst um deren Achsen die Bewegung der Drohne um die entsprechende Achse angesteuert werden.

Die US 2018/0356907 A1, EP 0 383 663 A1 und US 9,898,033 B1 beschreiben 1-Hand Fernsteuerungen zur Steuerung eines Fahrzeugs, zum Beispiel eines Fluggerätes.

Die WO 2017/125428 A1 betrifft eine Vorrichtung zur Fernsteuerung eines Fahrzeugs, wie eines realen oder virtuellen Luft-, Land- oder Wasserfahrzeugs, mit einer Steuerschnittstelle und Kommunikationsmitteln zur Übertragung von Steueranweisungen des Piloten an das Fahrzeug. Die Steuerschnittstelle ist eine mechanische Schnittstelle, die in mehreren Richtungen in Bezug auf ein festes Bezugssystem (XYZ) ausgerichtet werden kann und ein Steuerorgan aufweist, das vom Piloten, der sich in diesem festen Bezugssystem befindet, gehalten werden kann.

Darstellung **der** Erfindung: Aufgabe, Lösung, **Vorteile**

Der Erfindung liegt die Aufgabe zugrunde, eine Steuerungsvorrichtung zum Steuern von unbemannten und/oder bemannten und/oder virtuellen Flugobjekten derart weiter zu verbessern, dass die Steuerung einfacher zu handhaben und auch von ungeübten Personen intuitiv und schneller erlernbar ist.

Hierfür ist erfindungsgemäß eine Steuerungsvorrichtung zum Steuern von unbemannten und/oder bemannten und/oder virtuellen Flugobjekten vorgesehen, wobei eine Bewegung um eine Hochachse, eine Längsachse und eine Querachse des Flugobjekts mittels eines ersten Bedienelementes gesteuert wird, wobei ferner eine Veränderung einer Flughöhe und/oder einer Geschwindigkeit und/oder eines Schubs des Flugobjekts mittels eines zweiten Bedienelements gesteuert wird. Erfindungsgemäß ist die Steuerungsvorrichtung derart ausgebildet, dass eine Drehbewegung und/oder Schwenkbewegung des ersten Bedienelements um dessen Hochachse, dessen Längsachse und dessen Querachse die Bewegung des Flugobjekts um dessen Hochachse, Längsachse und Querachse bewirkt.

Die erfindungsgemäße Steuerungsvorrichtung ist beispielsweise zum Steuern von Unterwasserdrohnen, unbemannten und bemannten Drohnen, Raumschiffen, Lenkraketen, Hubschraubern, Remoteköpfen (z.B. Kamera-Remoteköpfen), Modellflugzeugen oder Gimbals einsetzbar. Des Weiteren kann die erfindungsgemäße Steuerungsvorrichtung zum Steuern von virtuellen Flugobjekten, beispielsweise für Video- beziehungsweise Computerspiele oder Flugsimulatoren dienen.

Damit der Umgang mit der erfindungsgemäßen Steuerungsvorrichtung einfacher zu erlernen und intuitiv zu handhaben ist, weist die Steuerungsvorrichtung zwei separate Bedienelemente, ein erstes Bedienelement und ein zweites Bedienelement, auf. Im Gegensatz zur klassischen Vier-Kanal-Fernsteuerung dient das erste Bedienelement zur Ansteuerung von drei Kanälen, nämlich zur Ansteuerung der Bewegung beziehungsweise Auslenkung um die Hochachse, die Längsachse und die Querachse des Flugobjekts. Das zweite Bedienelement dient zur Ansteuerung des vierten Kanals, nämlich zur Veränderung einer Flughöhe und/oder einer Geschwindigkeit und/oder eines Schubs des Flugobjekts. Bei einer Drohne beziehungsweise einem Multikopter entspricht das zum Beispiel dem Gas. Bei anderen Flugobjekten könnte die Ansteuerung des vierten Kanals über das zweite Bedienelement zum Beispiel eine Veränderung der Geschwindigkeit, der Beschleunigung oder des Schubs, insbesondere des Vorwärtsschubs, bewirken.

Zur Ansteuerung der drei Kanäle ist das erste Bedienelement drehbar und schwenkbar gelagert, derart, dass eine Drehbewegung um die Hochachse des ersten Bedienelements eine Ansteuerung und Bewegung des Flugobjekts um dessen Hochachse bewirkt. Eine Schwenkbewegung beziehungsweise Drehbewegung des ersten Bedienelements um dessen Längsachse bewirkt eine Bewegung des Flugobjekts um dessen Längsachse. Ferner bewirkt eine Drehbewegung beziehungsweise Schwenkbewegung des ersten Bedienelements um dessen Querachse eine Bewegung des Flugobjekts um dessen Querachse. Somit kann das erste Bedienelement um dessen drei Achsen bewegt beziehungsweise gedreht werden, wobei jede Bewegung beziehungsweise Auslenkung eine entsprechende Bewegung beziehungsweise Auslenkung des Flugobjekts um die jeweilige korrespondierende Achse bewirkt.

Hierfür weist die Steuerungsvorrichtung eine feststehende Basis auf, zu welcher das erste Bedienelement relativ um dessen 3 Achsen bewegt beziehungsweise geschwenkt oder gedreht werden kann. Hierunter ist zu verstehen, dass das erste Bedienelement drehbar und/oder schwenkbar auf der feststehenden Basis gelagert ist. Die feststehende Basis wird somit nicht mit dem ersten Bedienelement zusammen bewegt. Beispielsweise könnte die feststehende Basis eine Auflageplatte oder ein entsprechend ausgebildetes Gestell, ein Stativ oder anderweitig ausgebildet sein. Auch könnte die feststehende Basis in einen Gegenstand eingebaut sein. Mittels eines entsprechenden Gewichts- oder Druckverhältnisses kann die Basis bei Betätigung beziehungsweise Bewegung des ersten Bedienelements feststehend gehalten werden. Die feststehende Basis kann somit auch zur Auflage der Steuerungsvorrichtung auf eine Unterlage, z.B. einen Tisch, dienen. Alternativerweise könnte die Steuerungsvorrichtung auch zum Umhängen ausgebildet sein. In diesem Fall könnte die feststehende Basis ein Abstützelement zum Abstützen am Körper oder Positionieren vor dem Körper sein. Im Sinne der Erfindung ist unter der feststehenden Basis somit ein Element zu verstehen, welches relativ zum ersten Bedienelement fixiert ist. Die feststehende Basis muss hierzu aber nicht, könnte aber, dauerhaft örtlich fixiert sein.

Vorzugsweise ist das erste Bedienelement über ein Lagerelement oder über mehrere Lagerelemente mit der feststehenden Basis verbunden. Insbesondere ist das erste Bedienelement mittels eines Lagerelements drehbar um die Hochachse des ersten Bedienelements auf der feststehenden Basis gelagert beziehungsweise drehbar mit dieser verbunden. Somit wird das erste Bedienelement beziehungsweise dessen Hochachse über die feststehende Basis zumindest temporär örtlich festgehalten beziehungsweise fixiert. Die Steuerungsvorrichtung im Ganzen kann aber weiterhin portabel ausgebildet sein.

Für jede der drei Achsen des Bedienelements weist die Steuerungsvorrichtung Winkelabnehmer zur Erfassung der Auslenkung beziehungsweise des Ausschlags der Bewegung um die jeweilige Achse auf. Diese Winkelabnehmer können an jeder geeigneten Stelle der jeweiligen Achse angeordnet sein. Beispielsweise können die Winkelabnehmer mittig an den Achsen, an den Enden der Achsen oder dazwischen angebracht sein. Mittels der Winkelabnehmer wird die Auslenkung beziehungsweise der Ausschlag des Bedienelements um die jeweilige Achse erfasst. Der mittels der Winkelabnehmer erfasste Winkel dient als Basis zur Ansteuerung der Auslenkung beziehungsweise Bewegung des Flugobjekts um die entsprechende beziehungsweise korrespondierende Achse.

Die Längsachse und Querachse des ersten Bedienelements können beabstandet zueinander sein oder einen Schnittpunkt aufweisen und somit auf einer Ebene angeordnet sein. Bevorzugterweise ist der Abstand zwischen der Längsachse und der Querachse kleiner als 10 cm, besonders bevorzugterweise kleiner als 5 cm und ganz bevorzugterweise kleiner als 2,5 cm. Erfindungsgemäß verlaufen die Hochachse, die Längsachse und die Querachse des ersten Bedienelements aber durch einen gemeinsamen Punkt, einen zentralen Schnittpunkt der drei Achsen. Insbesondere liegt der gemeinsame Punkt oberhalb der feststehenden Basis.

Des Weiteren ist erfindungsgemäß vorgesehen, dass das erste Bedienelement in Bezug auf dessen Hochachse und/oder dessen Längsachse und/oder dessen Querachse mittels eines Federelements fixiert ist. Dadurch ist eine automatische Rückstellung in die Null-Position beziehungsweise Null-Stellung des ersten Bedienelements in Bezug auf dessen jeweilige Achse vorgesehen. Das Federelement ist ein flexibles Element, insbesondere eine Feder, ein Gummi, oder ein hydraulisches Element und fixiert die jeweilige Achse mittels einer Zug- und/oder Druckverbindung. Die Federwirkung beziehungsweise Federkraft des Federelements ist vorzugsweise einzeln für jede Achse oder gemeinsam für alle Achsen einstellbar beziehungsweise variierbar. Es kann auch für jede Achse ein separates Federelement vorgesehen sein. Dabei kann die Federwirkung beziehungsweise Federkraft bei Bedarf auch deaktiviert werden. Somit wird das erste Bedienelement in Bezug auf dessen Hochachse und/oder dessen Längsachse und/oder dessen Querachse mittels des Federelements im neutralen Zustand beziehungsweise dessen Null-Stellung fixiert.

Auch ist bevorzugterweise vorgesehen, dass das erste Bedienelement zwei parallele und zueinander beabstandete Ebenen aufweist, welche gemeinsam um die jeweilige Achse, die Hochachse, Längsachse und Querachse des ersten Bedienelements gedreht beziehungsweise geschwenkt werden. Die beiden Ebenen können plattenförmig ausgebildet sein. Beide Ebenen sind dabei derart miteinander verbunden, dass sie derselben Bewegung folgen. Hierunter ist zu verstehen, dass die Lage der beiden Ebenen zueinander sowie deren Abstand zueinander bei Bewegung des ersten Bedienelements konstant bleiben. Des Weiteren ist bevorzugterweise vorgesehen, dass der zentrale Schnittpunkt der drei Achsen des Bedienelements zwischen den beiden Ebenen, ganz besonders bevorzugterweise mittig zwischen den beiden Ebenen, angeordnet ist.

Alternativerweise ist das erste Bedienelement direkt auf der feststehenden Basis um alle drei Achsen bewegbar gelagert. Hierfür kann das erste Bedienelement zum Beispiel einen von der feststehenden Basis ausgehend zunehmenden Querschnitt aufweisen. Zum Beispiel ist das erste Bedienelement zumindest abschnittsweise kegelförmig ausgebildet oder weist zumindest abschnittsweise die Form eines Kegelausschnitts auf.

Das zweite Bedienelement ist bevorzugterweise als Hebel, Drehrad, Wippe, Pistolenabzug oder Pedal ausgebildet. Je nachdem, ob das zweite Bedienelement zur Fußbetätigung oder Betätigung mit einem Finger oder mehreren Fingern vorgesehen ist, kann das zweite Bedienelement entsprechend ausgestaltet sein. Zur Fußbetätigung ist das zweite Bedienelement demnach insbesondere als Pedal, pedalförmig oder als Wippe ausgebildet. Zur Handbetätigung beziehungsweise zur Betätigung mit einem Finger oder mehreren Fingern ist das zweite Bedienelement bevorzugterweise als Hebel, Drehrad, Wippe oder Pistolenabzug ausgebildet.

Das zweite Bedienelement ist bevorzugterweise an dem ersten Bedienelement und/oder an der feststehenden Basis der Steuerungsvorrichtung angeordnet.

Somit sind vorzugsweise zumindest zwei Varianten zur Anordnung des zweiten Bedienelements vorgesehen. Bei einer ersten Variante ist das zweite Bedienelement auf oder an dem ersten Bedienelement angebracht, wobei das zweite Bedienelement zusammen mit dem ersten Bedienelement mit bewegt wird, sodass bei beidhändiger Bedienung des ersten Bedienelements das zweite Bedienelement immer mit dem Finger erreichbar beziehungsweise betätigbar ist. Ein Loslassen des ersten Bedienelements ist somit zum Betätigen des zweiten Bedienelements nicht erforderlich.

Bei der zweiten Variante ist das zweite Bedienelement nicht mit dem ersten Bedienelement, sondern mit der feststehenden Basis der Steuerungsvorrichtung verbunden. Dabei folgt das zweite Bedienelement der Bewegung des ersten Bedienelements nicht.

Für die erste Variante könnte das zweite Bedienelement beispielsweise als Hebel, Drehrad, Wippe oder Pistolenabzug auf dem ersten Bedienelement, insbesondere auf der oberen Ebene des ersten Bedienelements, angeordnet sein. Bei der zweiten Variante könnte das zweite Bedienelement beispielsweise zur Fußbetätigung als Pedal oder als Wippe separat vorgesehen sein und somit nicht mit dem ersten Bedienelement in Verbindung stehen.

Die Steuerungsvorrichtung weist erfindungsgemäß zwei Griffe auf, welche starr mit dem ersten Bedienelement oder starr mit der feststehenden Basis der Steuerungsvorrichtung verbunden sind und wobei die zwei Griffe zum Greifen mit beiden Händen dienen. Die Ausrichtung der Griffe sowie der Abstand der Griffe zueinander sind vorzugsweise einstellbar beziehungsweise veränderbar. Die Griffe können als vollständig separate Griffe ausgebildet sein oder auch durchgängig, beispielsweise mittels einer Stange, miteinander verbunden sein. Ferne können die Griffe Teil der oberen Ebene des ersten Bedienelements oder vollständig einstückig mit dem ersten Bedienelement ausgebildet sein.

In einer ersten Variante sind die Griffe starr mit dem ersten Bedienelement verbunden. Diese Variante dient insbesondere für eine sitzende Anwendung beziehungsweise sitzende Bedienung der Steuerungsvorrichtung. Dabei wird das erste Bedienelement direkt über die Griffe bewegt. Die Griffe sind besonders bevorzugterweise auf der oberen Ebene des ersten Bedienelements angeordnet. Diese Variante ist auch geeignet, wenn die Steuerungsvorrichtung umgehängt wird und vor dem Körper im Stand bedient wird.

Bei einer zweiten Variante sind die Griffe starr mit der feststehenden Basis der Steuerungsvorrichtung und nicht mit dem ersten Bedienelement verbunden. Diese Variante dient insbesondere für eine aufsitzende, liegende oder stehende Bedienung der Steuerungsvorrichtung. Bei diesen Bedienarten kann das erste Bedienelement eine Sitzfläche, Liegefläche oder Stehfläche aufweisen, auf welche sich die Person setzen, legen oder stellen und mittels Gewichtsverlagerung das erste Bedienelement um dessen drei Achsen bewegen kann. Für diese Bedienarten sind die Griffe bevorzugterweise starr mit der feststehenden Basis und nicht auf dem ersten Bedienelement angeordnet. Die Griffe dienen somit mehr dem Festhalten beziehungsweise Abstützen, wobei das erste Bedienelement mittels der Körperbewegung beziehungsweise Gewichtsverlagerung und nicht über die Griffe direkt bewegt wird.

Die Griffe sind erfindungsgemäß auf einer Parallelen zur Querachse des ersten Bedienelements sowie besonders bevorzugterweise höhenversetzt zur Querachse des ersten Bedienelements angeordnet. Dabei können die Griffe, müssen aber nicht, mittig auf dem ersten Bedienelement angeordnet sein.

Des Weiteren ist eine Null-Stellung beziehungsweise Null-Position des ersten Bedienelements in Bezug auf dessen Hochachse, dessen Längsachse und dessen Querachse einstellbar und variierbar. Unter einer Null-Stellung des ersten Bedienelements ist die Stellung beziehungsweise Position zu verstehen, welche keine Auslenkung des Flugobjekts bewirkt. Es ist somit eine neutrale Stellung des ersten Bedienelements. Dabei kann, muss die Null-Stellung aber nicht der Mittelpunkt einer maximalen Auslenkung beziehungsweise eines maximalen Winkels um eine der Achsen entsprechen. Die Null-Stellung könnte derart vorgesehen sein, dass das erste Bedienelement in der Null-Stellung horizontal und parallel zur feststehenden Basis angeordnet ist. Alternativerweise könnte die Null-Stellung auch eine Schräglage beziehungsweise eine vorgegebene Auslenkung um eine oder mehrere der Achsen darstellen.

Ferner ist bevorzugterweise vorgesehen, dass das erste Bedienelement um dessen Hochachse um einen ersten maximalen Winkel drehbar beziehungsweise schwenkbar ist, wobei der erste maximale Winkel einstellbar und variierbar ist. Unter einem maximalen Winkel ist im Sinne der vorliegenden Erfindung ein maximaler Gesamtausschlag beziehungsweise eine maximale Range zu verstehen, um welche das Bedienelement um die jeweilige Achse drehbar beziehungsweise schwenkbar ist. Der erste maximale Winkel bezieht sich dabei auf die maximale Auslenkung um die Hochachse des ersten Bedienelements. Der erste maximale Winkel kann symmetrisch oder unsymmetrisch um die Null-Stellung in Bezug auf die Hochachse des ersten Bedienelements eingestellt sein beziehungsweise eingestellt werden. Zum Beispiel kann durch Variierung beziehungsweise Veränderung der Null-Stellung des ersten Bedienelements in Bezug auf dessen Hochachse eine unsymmetrische Einstellung erzeugt werden. Ein bevorzugter Startwert für den ersten maximalen Winkel entspricht 50°, bei symmetrischer Einstellung ist auf dieser Basis eine maximale Auslenkung des ersten Bedienelements um dessen Hochachse um 25° in jede der beiden Richtungen möglich.

Mittels eines Übersetzungsfaktors wird das Verhältnis zwischen einem erfassten Winkel und der tatsächlichen Auslenkung beziehungsweise dem tatsächlichen Winkel um die Achse des Flugobjekts bestimmt. Die Auslenkung des ersten Bedienelements um eine jeweilige Achse wird mittels eines Winkelabnehmers wie vorbeschrieben erfasst. Der Übersetzungsfaktor ist besonders bevorzugterweise einstellbar. Dabei kann der Übersetzungsfaktor über die Variierung des maximalen Gesamtausschlags beziehungsweise des entsprechenden maximalen Winkels und/oder auch anderweitig, zum Beispiel elektronisch in Form eines Rechenwertes einstellbar sein.

Für jede Achse kann dabei ein separater Übersetzungsfaktor vorgesehen sein. Im Sinne der vorliegenden Erfindung bezieht sich der erste Übersetzungsfaktor auf das Verhältnis zwischen erfasstem Winkel um die Auslenkung des ersten Bedienelements um dessen Hochachse und der tatsächlichen Auslenkung um die Hochachse des Flugobjekts. Der zweite Übersetzungsfaktor bezieht sich auf das Verhältnis der Auslenkungen um die Längsachse des ersten Bedienelements und die tatsächliche Auslenkung des Flugobjekts um dessen Längsachse. Der dritte Übersetzungsfaktor bezieht sich auf das Verhältnis der Auslenkungen um die Querachse des ersten Bedienelements und die tatsächliche Auslenkung des Flugobjekts um dessen Querachse. Zur Veranschaulichung dieses Prinzips dient die folgende einfache Gleichung:

$$\text{Winkel A} / \text{X (Übersetzungsfaktor)} = \text{Winkel B}$$

Winkel A entspricht dabei dem erfassten Winkelausschlag des ersten Bedienelements um eine jeweilige Achse;
X entspricht dabei dem Übersetzungsfaktor für die entsprechende Achse;
Winkel B entspricht der tatsächlichen Ansteuerung des Winkelausschlags für das Flugobjekt um die korrespondierende Achse.

Das erste Bedienelement ist ferner bevorzugterweise um dessen Längsachse um einen zweiten maximalen Winkel drehbar, wobei der zweite maximale Winkel einstellbar und variierbar ist. Des Weiteren ist das erste Bedienelement bevorzugterweise um dessen Querachse um einen dritten maximalen Winkel drehbar, wobei der dritte maximale Winkel einstellbar und variierbar ist. Für den zweiten und dritten maximalen Winkel gelten dieselben vorbeschriebenen Merkmale wie für den ersten maximalen Winkel.

Somit beziehen sich der erste maximale Winkel auf den maximalen Gesamtausschlag des ersten Bedienelements um dessen Hochachse, der zweite maximale Winkel auf den maximalen Gesamtausschlag des ersten Bedienelements um dessen Längsachse und der dritte maximale Winkel auf den maximalen Gesamtausschlag des ersten Bedienelements um dessen Querachse.

Des Weiteren ist bevorzugterweise vorgesehen, dass eine Null-Stellung des zweiten Bedienelements einstellbar und variierbar ist. Damit ist auch für das zweite Bedienelement ein maximaler Gesamtausschlag beziehungsweise eine maximale Range variierbar und einstellbar. Die Null-Stellung kann in einer Null-Position, einer Mittelstellung oder auch in jedem Bereich zwischen Null-Position und Mittelstellung des zweiten Bedienelements liegen. Diese Position beziehungsweise diese Null-Stellung ist besonders bevorzugterweise veränderbar.

Wie auch für das erste Bedienelement, kann für das zweite Bedienelement ein Übersetzungsfaktor, nämlich der vierte Übersetzungsfaktor, vorgesehen sein. Der vierte Übersetzungsfaktor gibt dann das Verhältnis zwischen der erfassten Auslenkung des zweiten Bedienelements und der tatsächlichen Ansteuerung des Flugobjekts wieder. Bei einem Multikopter wäre dies das Verhältnis zwischen der erfassten Auslenkung des zweiten Bedienelements und dem Gas, mit dem die Höhe des Multikopters verändert wird. Zur Veranschaulichung dieses Prinzips dient die folgende einfache Gleichung:

$$\text{Auslenkung A} / \text{X (Übersetzungsfaktor)} = \text{Ansteuerung B}$$

Auslenkung A entspricht dabei dem erfassten Ausschlag des zweiten Bedienelements;
X entspricht dabei dem Übersetzungsfaktor für das zweite Bedienelement;

Ansteuerung B entspricht der tatsächlichen Ansteuerung des Flugobjekts zur Veränderung dessen Flughöhe, Geschwindigkeit oder Schubs;

Das zweite Bedienelement weist vorzugsweise ein Federmittel auf, womit nach einem Betätigen des zweiten Bedienelements dieses in dessen Null-Stellung zurückgesetzt wird. Nach dem Loslassen des zweiten Bedienelements wird dieses somit mittels des Federmittels automatisch zurückgesetzt. Wie auch beim Federelement des ersten Bedienelements ist das Federmittel des zweiten Bedienelements bevorzugterweise in Bezug auf dessen Federwirkung beziehungsweise Federkraft einstellbar und variierbar. Es wird somit eine automatische Rückstellung in die Null-Stellung des zweiten Bedienelements bereitgestellt.

## Kurze Beschreibung der Zeichnungen

Die Erfindung wird im Folgenden anhand bevorzugter Ausführungsformen beispielhaft erläutert.
Es zeigen schematisch:

Figur 1:            eine perspektivische Ansicht einer Steuerungsvorrichtung,

Figur 2:            eine perspektivische Ansicht einer Steuerungsvorrichtung für die Anwendung beziehungsweise Bedienung im liegenden Zustand,

Figur 3:            eine perspektivische Ansicht einer Steuerungsvorrichtung zum Umhängen,

Figuren 4 und 5:    eine weitere Steuerungsvorrichtung mit ergonomisch geformten ersten Bedienelement, und

Figur 6a:           eine Prinzipdarstellung einer 4-Kanal-Fernsteuerung aus dem Stand der Technik,

Figur 6b:           eine Prinzipdarstellung einer Steuerungsvorrichtung, und

Figur 6c:           eine 3-dimensionale Prinzipdarstellung einer Steuerungsvorrichtung.

## Bevorzugte Ausführungsformen der Erfindung

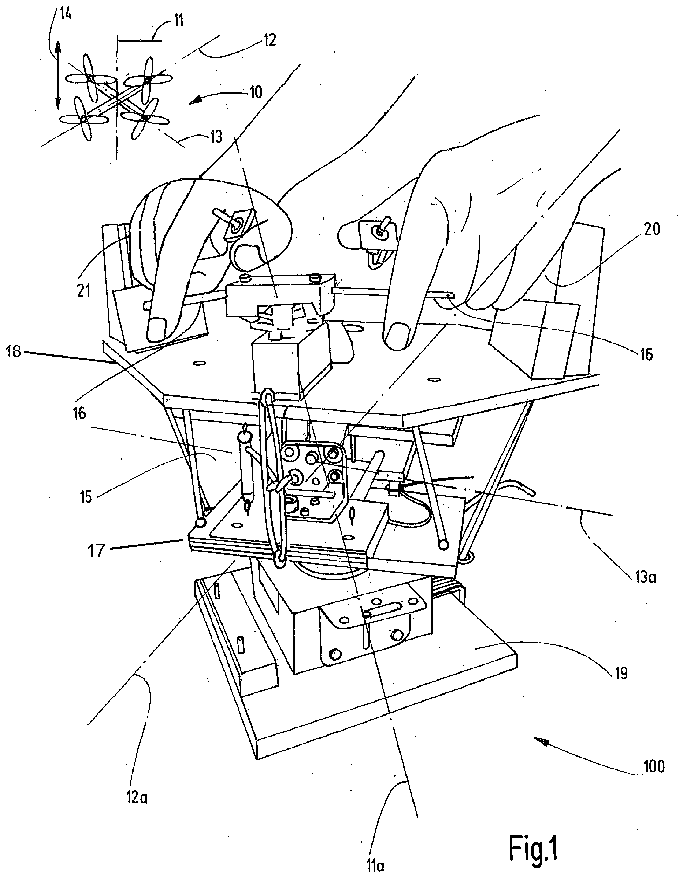

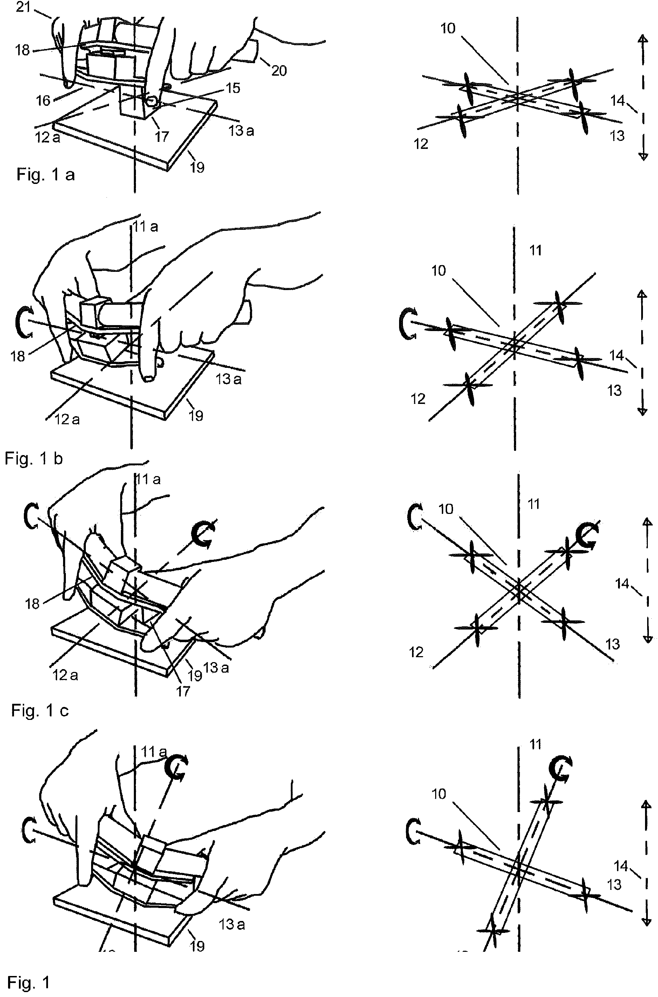

Figur 1 zeigt beispielhaft eine Variante einer Steuerungsvorrichtung 100 zum Steuern von unbemannten und/oder bemannten und/oder virtuellen Flugobjekten 10. Beispielhaft ist hier die Steuerung eines Multikopters beziehungsweise einer Drohne dargestellt. Dabei wird über die Steuerungsvorrichtung 100 die Bewegung um eine Hochachse 11, eine Längsachse 12 und eine Querachse 13 des Flugobjekts 10 gesteuert. Die Bewegung um diese drei Achsen 11, 12, 13 des Flugobjekts 10 wird mittels des ersten Bedienelements 15 der Steuerungsvorrichtung 100 gesteuert.
Hierfür ist das erste Bedienelement 15 auf einer feststehenden Basis 19 drehbar um die Hochachse 11a des ersten Bedienelements 15 sowie auch schwenkbar um die Längsachse 12a und die Querachse 13a des ersten Bedienelements 15 gelagert.
Eine Drehbewegung des ersten Bedienelements 15 um dessen Hochachse 11a bewirkt unter Berücksichtigung des ersten Übersetzungsfaktors eine entsprechende Drehbewegung des Flugobjekts 10 um dessen Hochachse 11. Eine Schwenkbewegung des ersten Bedienelements 15 um dessen Längsachse 12a bewirkt unter Berücksichtigung des zweiten Übersetzungsfaktors eine entsprechende Schwenkbewegung des Flugobjekts 10 um dessen Längsachse 12.
Eine Schwenkbewegung des ersten Bedienelements 15 um dessen Querachse 13a bewirkt unter Berücksichtigung des dritten Übersetzungsfaktors eine Schwenkbewegung des Flugobjekts 10 um dessen Querachse 13.
Wie bereits erwähnt, ist in Figur 1 beispielhaft die Ansteuerung eines Multikopters beziehungsweise einer Drohne gezeigt. Der vierte Kanal entspricht bei einem Multikopter dem Gas und somit der Veränderung einer Flughöhe 14 des Flugobjekts 10. Diese Veränderung der Flughöhe 14 wird über das zweite Bedienelement 16 der Steuerungsvorrichtung 100 angesteuert. Bei dem in Figur 1 gezeigten Beispiel ist das zweite Bedienelement 16 auf dem ersten Bedienelement 15 angeordnet, derart, dass dieses in einfacher Weise mittels der Zeigefinger bedient werden kann, ohne dabei die Griffe 20, 21 der Steuerungsvorrichtung 100 auf dem ersten Bedienelement 15 loslassen zu müssen.
In dem in Figur 1 gezeigten Beispiel sind die Griffe 20, 21 auf dem ersten Bedienelement 15 angeordnet und mit diesem verbunden. Die Ausrichtung der Griffe 20, 21, insbesondere deren Neigung zur Oberfläche des ersten Bedienelements 15, ist variierbar beziehungsweise einstellbar. Auch könnte der Abstand der Griffe 20, 21 zueinander einstellbar sein.

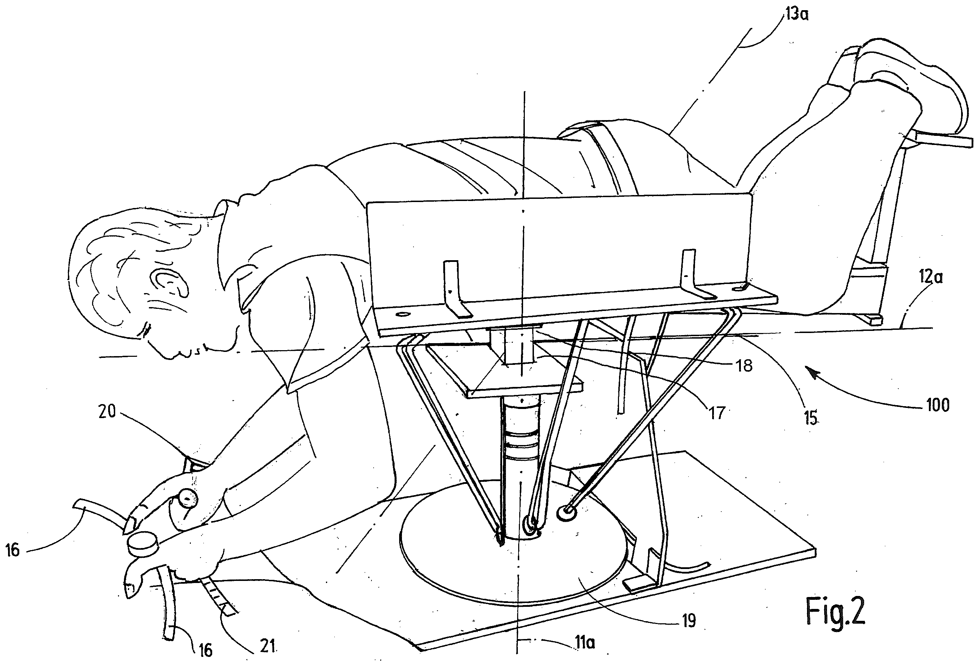

In Figur 2 ist beispielhaft eine Steuerungsvorrichtung 100 für eine aufliegende Bedienung gezeigt. Hierfür weist das erste Bedienelement 15 eine Liegefläche auf, auf welche sich die bedienende Person legen kann. Die Griffe 20, 21 sowie auch das zweite Bedienelement 16 sind im Gegensatz zu der in Figur 1 dargestellten Variante nicht auf dem ersten Bedienelement 15 angeordnet beziehungsweise mit diesem verbunden. Im Gegensatz hierzu können die Griffe 20, 21 bei dieser Varianten mit der feststehenden Basis 19 verbunden oder separat fixiert sein.

Bei dem in Figur 2 gezeigten Beispiel wird das erste Bedienelement 15 im Gegensatz zu der in Figur 1 gezeigten Variante durch Verlagerung des Körpergewichts bewegt. Hierfür dienen die Griffe 20, 21 zum Festhalten beziehungsweise Abstützen. Somit kann in einfacher Weise durch Verlagerung des Körpergewichts das erste Bedienelement 15 um dessen Hochachse 11a gedreht sowie um dessen Längsachse 12a und um dessen Querachse 13a gekippt beziehungsweise geschwenkt werden.

Figur 2 zeigt lediglich eine Möglichkeit für eine Steuerungsvorrichtung, wobei das erste Bedienelement 15 mittels Gewichtsverlagerung des Körpers bedient werden kann. Anstelle einer Liegefläche könnte die Steuerungsvorrichtung 100 auch eine Sitzfläche zur aufsitzenden Bedienung oder eine Stehfläche zur stehenden beziehungsweise aufstehenden Bedienung aufweisen.

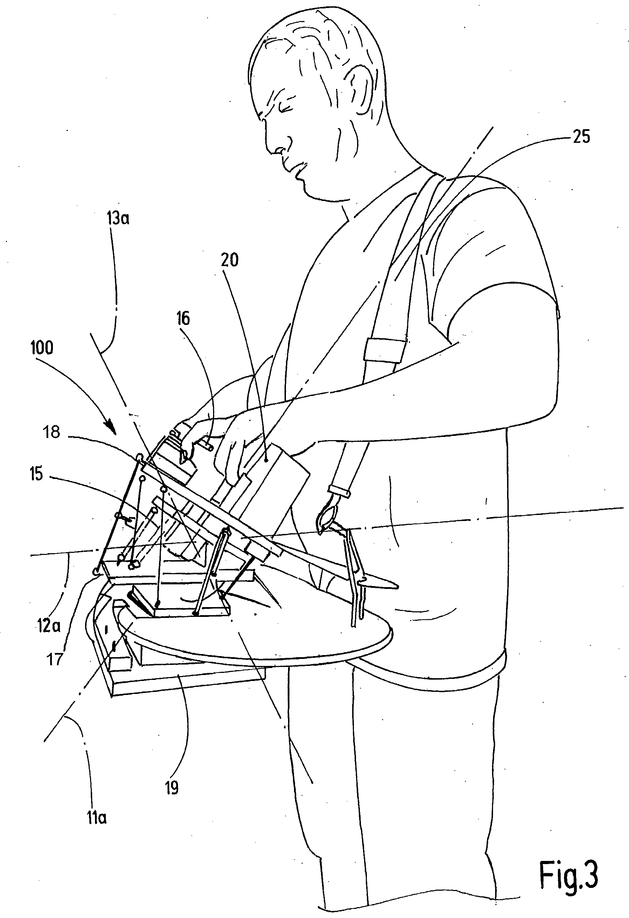

In Figur 3 ist beispielhaft eine Steuerungsvorrichtung 100 zum Umhängen dargestellt. Hierfür weist die Steu- ungsvorrichtung 100 einen Gurt 25 auf. Prinzipiell ist das in Figur 3 dargestellte Beispiel ähnlich zu der in Figur 1 dargestellten Variante ausgebildet. Im Gegensatz zu der in Figur 1 dargestellten Variante weist die feststehende Basis 19 allerdings ein Abstützelement zum Abstützen am beziehungsweise vor dem Körper auf.

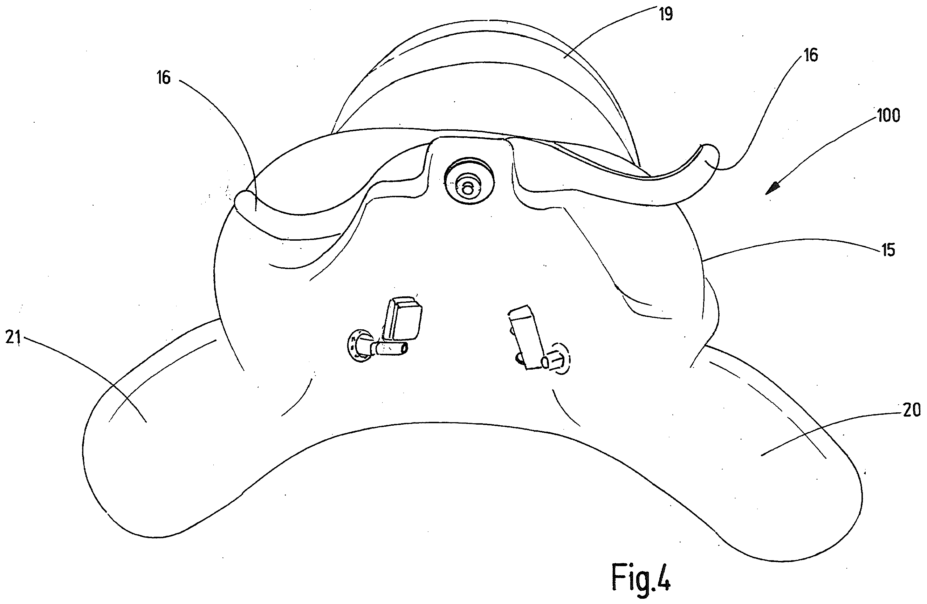

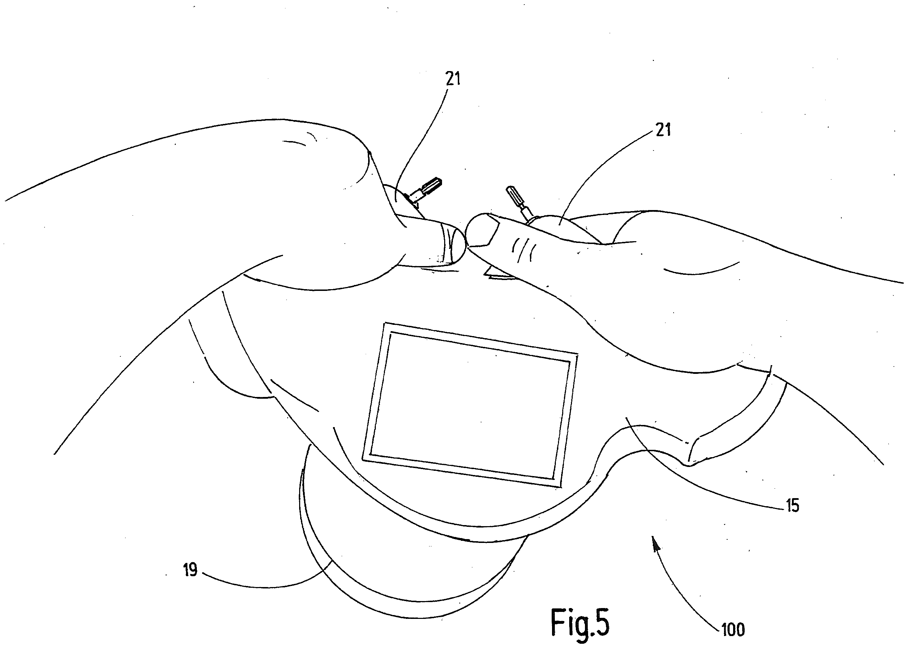

Figuren 4 und 5 zeigen eine weitere Variante einer Steuerungsvorrichtung 100. Die hier dargestellte Variante ist im Gegensatz zu den Beispielen in den Figuren 1 bis 3 ergonomischer geformt. Das erste Bedienelement 15 ist einstückig mit den Griffen 20, 21 ausgebildet und auf einer feststehenden Basis 19 drehbar um die Hochachse 11a des ersten Bedienelements 15 und schwenkbar um die Längsachse 12a und Querachse 13a des ersten Bedienelements 15 gelagert. In dem in Figuren 4 und 5 dargestellten Beispiel ist die feststehende Basis 19 im Vergleich zum oberen Bereich des ersten Bedienelements 15 relativ klein ausgebildet und weist einen runden Querschnitt auf. Die feststehende Basis 19 könnte aber jede geeignete Form und Größe aufweisen.

In dem in Figuren 4 und 5 gezeigten Beispiel ist das erste Bedienelement 15 direkt über die entsprechenden Lager auf der feststehenden Basis 19 angeordnet beziehungsweise auf dieser gelagert. Ähnlich wie in den Beispielen aus Figuren 1 und 3 ist das zweite Bedienelement 16 in Form eines beziehungsweise zweier Hebel auf dem ersten Bedienelement 15 angeordnet.

Das in den Figuren 4 und 5 dargestellte Beispiel einer Steuerungsvorrichtung 100 weist durch die einstückige Ausbildung des ersten Bedienelements 15 mit den Griffen 20, 21 eine besonders ergonomische Formgebung auf und bietet somit ein angenehmes Halten und Greifen sowie Bedienen der Steuerungsvorrichtung.

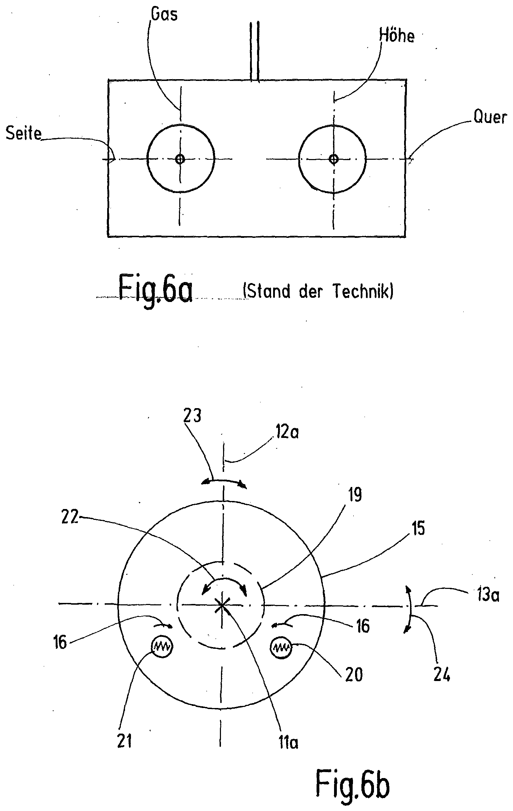

In Figur 6a ist eine Prinzipdarstellung einer aus dem Stand der Technik bekannten Vier-Kanal-Fernsteuerung gezeigt. Eine derartige Vier-Kanal-Fernsteuerung weist zwei Steuerhebel auf, über welche jeweils zwei Kanäle des Flugobjekts 10 (der besseren Übersicht halber in Figur 6a nicht dargestellt) angesteuert werden können. Typischerweise wird über den rechten Steuerhebel die Auslenkung des Flugobjekts 10 um dessen Hochachse 11 und dessen Querachse 13 angesteuert. Über den linken Steuerhebel wird die Auslenkung des Flugobjekts 10 um dessen Längssachse 12 und ferner das Gas und somit die Veränderung der Flughöhe des Flugobjekts 10 (vierter Kanal) angesteuert. Bei einer derartigen Fernsteuerung können die beiden Steuerhebel entweder mit den beiden Daumen oder jeweils mittels Daumen und Zeigefinger-Kombination bedient werden.

In Figur 6b ist eine Prinzipdarstellung der erfindungsgemäßen Steuerungsvorrichtung 100 gezeigt. Im Gegensatz zu aus dem Stand der Technik bekannten typischen Vier-Kanal-Fernsteuerungen (vergleiche hierzu Figur 6a) werden über ein erstes Bedienelement 15 drei Kanäle des Flugobjekts 10 (der besseren Übersicht halber ebenfalls nicht in Figur 6b dargestellt) angesteuert. Hierfür kann das erste Bedienelement 15 um dessen Hochachse 11a gedreht, um dessen Längsachse 12a gekippt beziehungsweise geschwenkt und um dessen Querachse 13a gekippt beziehungsweise geschwenkt werden. Das erste Bedienelement 15 ist hierfür in entsprechender Weise auf einer feststehenden Basis 19 drehbar und schwenkbar gelagert.

Im Gegensatz zur aus dem Stand der Technik bekannten Vier-Kanal-Fernsteuerung werden somit mittels eines einzigen Bedienelements (des ersten Bedienelements 15) drei Kanäle angesteuert. Der vierte Kanal wird mittels eines separaten Bedienelements, nämlich des zweiten Bedienelements 16, angesteuert. Somit sind gemäß der vorliegenden Erfindung ein erstes Bedienelement 15 zur Ansteuerung von drei Kanälen und ein zweites Bedienelement 16 zur Ansteuerung eines einzigen, nämlich des vierten Kanals, vorgesehen.

Zum einfacheren und angenehmeren Greifen des ersten Bedienelements 15 sind auf diesem entsprechende Griffe 20, 21 angeordnet. Mögliche Ausführungsformen und Varianten sind beispielhaft in den Figuren 1 bis 5 dargestellt.

Das erste Bedienelement 15 ist um dessen Hochachse 11a um einen ersten maximalen Winkel 22 drehbar. Der erste maximale Winkel 22 ist einstellbar beziehungsweise variierbar. Zur Umsetzung der Drehbewegung des ersten Bedienelements 15 um dessen Hochachse 11a in die eigentliche Ansteuerung des Flugobjekts 10 dient der erste Übersetzungsfaktor.

Entsprechend der Hochachse 11a des ersten Bedienelements 15 ist das erste Bedienelement 15 um dessen Längsachse 12a um einen zweiten maximalen Winkel 23 schwenkbar. Ferner ist das erste Bedienelement 15 entsprechend um dessen Querachse 13a um einen dritten maximalen Winkel 24 schwenkbar. Wie auch der erste maximale Winkel 22, sind der zweite maximale Winkel 23 und der dritte maximale Winkel 24 variierbar beziehungsweise einstellbar. Zur Umsetzung der tatsächlichen Ansteuerung des Flugobjekts 10 dienen hier der zweite und dritte Übersetzungsfaktor.

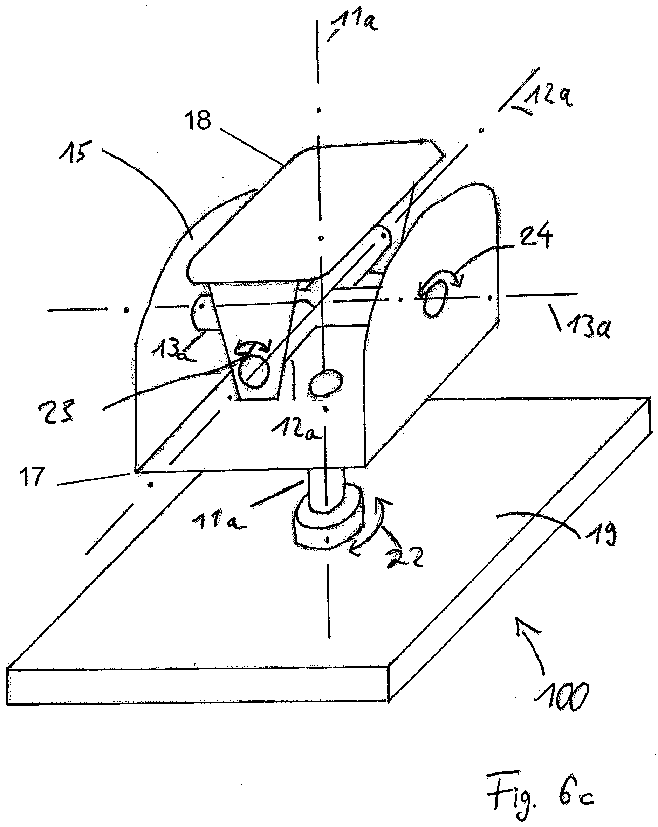

In Figur 6c ist eine 3-dimensionale Ansicht einer Prinzipdarstellung der Steuerungsvorrichtung 100 gezeigt. Das erste Bedienelement 15 ist um dessen Hochachse 11a drehbar auf der feststehenden Basis 19 gelagert. Ferner ist das erste Bedienelement 15 um dessen Längsachse 12a sowie dessen Querachse 13a schwenkbar angeordnet. Hierfür verlaufen in diesem Beispiel alle drei Achsen 11a, 12a, 13a durch einen gemeinsamen Schnittpunkt. Prinzipiell könnten die Längsanse 12a und die Querachse 13a aber auch in einem kleinen Abstand übereinander angeordnet sein.

Wie in Figur 6c gezeigt, kann die drehbare Lagerung der Hochachse 11a des ersten Bedienelements 15 entlang dieser Hochachse 11a beabstandet zur Längsachse 12a und Querachse 13a des ersten Bedienelements 15 angeordnet sein.

**Bezugszeichenliste**

| 100 | Steuerungsvorrichtung |
| --- | --- |
| 10 | Flugobjekt |
| 11 | Hochachse des Flugobjekts |
| 11a | Hochachse des ersten Bedienelements |
| 12 | Längsachse des Flugobjekts |
| 12a | Längsachse des ersten Bedienelements |
| 13 | Querachse des Flugobjekts |
| 13a | Querachse des ersten Bedienelements |
| 14 | Flughöhe des Flugobjekts |
| 15 | Erstes Bedienelement |
| 16 | Zweites Bedienelement |
| 17, 18 | Parallele Ebenen |
| 19 | Feststehende Basis |
| 20, 21 | Griffe |
| 22 | Erster maximaler Winkel |
| 23 | Zweiter maximaler Winkel |
| 24 | Dritter maximaler Winkel |
| 25 | Gurt |

**Patentansprüche**

**1.** Steuerungsvorrichtung (100) zum Steuern von unbemannten und/oder bemannten und/oder virtuellen Flugobjekten (10), insbesondere von realen und/oder virtuellen Multikoptern, wobei eine Bewegung um eine Hochachse (11), eine Längsachse (12) und eine Querachse (13) des Flugobjekts (10) mittels eines ersten Bedienelements (15) gesteuert wird, wobei ferner eine Veränderung einer Flughöhe (14) und/oder einer Geschwindigkeit und/oder eines Schubs des Flugobjekts (10) mittels eines zweiten Bedienelements (16) gesteuert wird, wobei

eine Drehbewegung und/oder Schwenkbewegung des ersten Bedienelements (15) um dessen Hochachse (11a), dessen Längsachse (12a) und dessen Querachse (13a) die Bewegung des Flugobjekts um dessen Hochachse (11), dessen Längsachse (12) und dessen Querachse (13) bewirkt, wobei die Steuerungsvorrichtung (100) zwei Griffe (20, 21) aufweist, welche starr mit dem ersten Bedienelement (15) oder starr mit einer feststehenden Basis (19) der Steuerungsvorrichtung (100) verbunden sind, wobei die Griffe (20, 21) auf einer Parallelen zur Querachse (13a) des ersten Bedienelements (15) angeordnet sind, und dass die zwei Griffe zum Greifen (20, 21) mit beiden Händen dienen, und wobei alle drei Achsen (11, 12, 13) des ersten Bedienelements (15) durch einen gemeinsamen Punkt verlaufen, **dadurch gekennzeichnet,** **dass** das erste Bedienelement (15) in Bezug auf dessen Hochachse (11a) und/oder dessen Längsachse (12a) und/oder dessen Querachse (13a) mittels eines Federelements fixiert ist.

**2.** Steuerungsvorrichtung (100) gemäß Anspruch 1, **dadurch gekennzeichnet,**

**dass** die Hochachse (11a) und die Längsachse (12a) und die Querachse (13a) des ersten Bedienelements (15) durch einen gemeinsamen Punkt verlaufen.

3. Steuerungsvorrichtung (100) gemäß einem der vorhergehenden Ansprüche,
   **dadurch gekennzeichnet,**
   **dass** das erste Bedienelement (15) zwei parallele und zueinander beabstandete Ebenen (17, 18) aufweist, welche gemeinsam um die jeweilige Achse (11a, 12a, 13a) des ersten Bedienelements (15) gedreht beziehungsweise geschwenkt werden.

4. Steuerungsvorrichtung (100) gemäß einem der vorhergehenden Ansprüche,
   **dadurch gekennzeichnet,**
   **dass** das zweite Bedienelement (16) als Hebel, Drehrad, Wippe, Pistolenabzug oder Pedal ausgebildet ist.

5. Steuerungsvorrichtung (100) gemäß einem der vorhergehenden Ansprüche,
   **dadurch gekennzeichnet,**
   **dass** das zweite Bedienelement (16) an dem ersten Bedienelement (15) angeordnet ist und/oder dass das zweite Bedienelement (16) an einer feststehenden Basis (19) der Steuerungsvorrichtung (100) angeordnet ist.

6. Steuerungsvorrichtung (100) gemäß einem der vorhergehenden Ansprüche,
   **dadurch gekennzeichnet,**
   **dass** eine Null-Stellung des ersten Bedienelements (15) in Bezug auf dessen Hochachse (11a) und/oder dessen Längsachse (12a) und/oder dessen Querachse (13a) einstellbar und variierbar ist.

7. Steuerungsvorrichtung (100) gemäß einem der vorhergehenden Ansprüche,
   **dadurch gekennzeichnet,**
   **dass** das erste Bedienelement (15) um dessen Hochachse (11a) um einen ersten maximalen Winkel (22) drehbar ist, wobei der erste maximale Winkel (22) einstellbar und variierbar ist.

8. Steuerungsvorrichtung (100) gemäß einem der vorhergehenden Ansprüche,
   **dadurch gekennzeichnet,**
   **dass** das erste Bedienelement (15) um dessen Längsachse (12a) um einen zweiten maximalen Winkel (23) drehbar ist, wobei der zweite maximale Winkel (23) einstellbar und variierbar ist.

9. Steuerungsvorrichtung (100) gemäß einem der vorhergehenden Ansprüche,
   **dadurch gekennzeichnet,**
   **dass** das erste Bedienelement (15) um dessen Querachse (13a) um einen dritten maximalen Winkel (24) drehbar ist, wobei der dritte maximale Winkel (24) einstellbar und variierbar ist.

10. Steuerungsvorrichtung (100) gemäß einem der vorhergehenden Ansprüche,
    **dadurch gekennzeichnet,**
    **dass** eine Null-Stellung des zweiten Bedienelements (16) einstellbar und variierbar ist.

11. Steuerungsvorrichtung (100) gemäß Anspruch 11,
    **dadurch gekennzeichnet,**
    **dass** das zweite Bedienelement (16) ein Federmittel aufweist, womit nach einem Betätigen des zweiten Bedienelements (16) dieses in dessen Null-Stellung zurückgesetzt wird.

**Claims**

1. Control device (100) for controlling unmanned and/or manned and/or virtual flying objects (10), in particular real and/or virtual multicopters, wherein a movement about a vertical axis (11), a longitudinal axis (12) and a transverse axis (13) of the flying object (10) is controlled by means of a first control element (15), wherein further a change in a flight altitude (14) and/or a speed and/or a thrust of the flying object (10) is controlled by means of a second control element (16), wherein

   a rotational movement and/or a swiveling movement of the first control element (15) about its vertical axis (11a), its longitudinal axis (12a) and its transverse axis (13a) causes the movement of the flying object about its vertical axis (11), its longitudinal axis (12) and its transverse axis (13),
wherein the control device (100) has two handles (20, 21) which are rigidly connected to the first control element (15) or rigidly connected to a fixed base (19) of the control device (100), wherein the handles (20, 21) are arranged on a line parallel to the transverse axis (13a) of the first control element (15), and
that the two handles (20, 21) serve for gripping with both hands, and wherein all three axes (11, 12, 13) of the first control element (15) pass through a common point ,
**characterized in that**
the first control element (15) is fixed with respect to its vertical axis (11a) and/or its longitudinal axis (12a) and/or its transverse axis (13a) by means of a spring element.

2. Control device (100) according to claim 1,
   **characterized in that**
   the vertical axis (11a) and the longitudinal axis (12a) and the transverse axis (13a) of the first control element (15) pass through a common point.

3. Control device (100) according to one of the preceding claims,
   **characterized in that**
   the first control element (15) has two parallel and spaced-apart planes (17, 18) which are rotated or pivoted together about the respective axis (11a, 12a, 13a) of the first control element (15).

4. Control device (100) according to one of the preceding claims,
   **characterized in that**
   the second control element (16) is formed as a lever, rotary wheel, rocker, pistol trigger, or pedal.

5. Control device (100) according to one of the preceding claims,
   **characterized in that**
   the second control element (16) is arranged at the first control element (15) and/or that the second control element (16) is arranged at a fixed base (19) of the control device (100).

6. Control device (100) according to one of the preceding claims,
   **characterized in that**
   a zero position of the first control element (15) is adjustable and variable with respect to its vertical axis (11a) and/or its longitudinal axis (12a) and/or its transverse axis (13a).

7. Control device (100) according to one of the preceding claims,
   **characterized in that**
   the first control element (15) can be rotated about its vertical axis (11a) through a first maximum angle (22), wherein the first maximum angle (22) is adjustable and variable.

8. Control device (100) according to one of the preceding claims,
   **characterized in that**
   the first control element (15) is rotatable about its longitudinal axis (12a) through a second maximum angle (23), wherein the second maximum angle (23) is adjustable and variable.

9. Control device (100) according to one of the preceding claims,
   **characterized in that**
   the first control element (15) is rotatable about its transverse axis (13a) through a third maximum angle (24), wherein the third maximum angle (24) is adjustable and variable.

10. Control device (100) according to one of the preceding claims,
    **characterized in that**
    a zero position of the second control element (16) is adjustable and variable.

11. Control device (100) according to claim 11,
    **characterized in that**
    the second control element (16) has a spring means, whereby after the second control element (16) has been actuated, it is reset to its zero position.

**Revendications**

1. Dispositif de commande (100) pour commander des objets volants (10) sans pilote et/ou avec pilote et/ou virtuels, en particulier des multicoptères réels et/ou virtuels, dans lequel un mouvement autour d'un axe vertical (11), un axe longitudinal (12) et un axe transversal (13) de l'objet volant (10) est commandé au moyen d'un premier élément de commande (15), une modification d'une altitude de vol (14) et/ou d'une vitesse et/ou d'une poussée de l'objet volant (10) étant en outre commandée au moyen d'un deuxième élément de commande (16),

   un mouvement de rotation et/ou un mouvement de pivotement du premier élément de commande (15) autour de son axe vertical (11a), de son axe longitudinal (12a) et de son axe transversal (13a) provoque le mouvement de l'objet volant autour de son axe vertical (11), de son axe longitudinal (12) et de son axe transversal (13),
   le dispositif de commande (100) comportant deux poignées (20, 21) qui sont reliées de manière rigide au premier élément de commande (15) ou de manière rigide à une base fixe (19) du dispositif de commande (100), les poignées (20, 21) étant disposées sur une ligne parallèle à l'axe transversal (13a) du premier élément de commande (15), et
   les deux poignées (20, 21) servent à saisir avec les deux mains, et les trois axes (11, 12, 13) du premier élément de commande (15) passent par un point commun ,
   **caractérisé en ce**
   **que** le premier élément de commande (15) est fixé par rapport à son axe vertical (11a) et/ou son axe longitudinal (12a) et/ou son axe transversal (13a) au moyen d'un élément à ressort.

2. Dispositif de commande (100) selon la revendication 1,
   **caractérisé en ce**
   **que** l'axe vertical (11a), l'axe longitudinal (12a) et l'axe transversal (13a) du premier élément de commande (15) passent par un point commun.

3. Dispositif de commande (100) selon l'une des revendications précédentes
   **caractérisé en ce**
   **que** le premier élément de commande (15) comporte deux plans parallèles et espacés l'un de l'autre (17, 18) qui sont tournés ou pivotés ensemble autour de l'axe respectif (11a, 12a, 13a) du premier élément de commande (15).

4. Dispositif de commande (100) selon l'une des revendications précédentes,
   **caractérisé en ce**
   **que** le deuxième élément de commande (16) est conçu comme un levier, une molette, une bascule, une gâchette de pistolet ou une pédale.

5. Dispositif de commande (100) selon l'une des revendications précédentes,
   **caractérisé en ce**
   **que** le deuxième élément de commande (16) est disposé sur le premier élément de commande (15) et/ou en ce que le deuxième élément de commande (16) est disposé sur une base fixe (19) du dispositif de commande (100).

6. Dispositif de commande (100) selon l'une des revendications précédentes,
   **caractérisé en ce**
   **qu'**une position zéro du premier élément de commande (15) est réglable et variable par rapport à son axe vertical (11a) et/ou son axe longitudinal (12a) et/ou son axe transversal (13a).

7. Dispositif de commande (100) selon l'une des revendications précédentes,
   **caractérisé en ce**
   **que** le premier élément de commande (15) peut pivoter autour de son axe vertical (11a) d'un premier angle maximal (22), le premier angle maximal (22) étant réglable et variable.

8. Dispositif de commande (100) selon l'une des revendications précédentes,
   **caractérisé en ce que**
   **que** le premier élément de commande (15) peut pivoter autour de son axe longitudinal (12a) selon un deuxième angle maximal (23), le deuxième angle maximal (23) étant réglable et variable.

9. Dispositif de commande (100) selon l'une des revendications précédentes,
   **caractérisé en ce**

que le premier élément de commande (15) peut pivoter autour de son axe transversal (13a) d'un troisième angle maximal (24), le troisième angle maximal (24) étant réglable et variable.

10. Dispositif de commande (100) selon l'une des revendications précédentes,
**caractérisé en ce**
qu'une position zéro du deuxième élément de commande (16) est réglable et variable.

11. Dispositif de commande (100) selon la revendication 11,
**caractérisé en ce**
que le deuxième élément de commande (16) comporte un moyen à ressort qui, après actionnement du deuxième élément de commande (16), ramène celui-ci dans sa position zéro.

Fig.1

Fig. 1 a

Fig. 1 b

Fig. 1 c

Fig. 1

Fig.2

Fig.3

Fig.4

EP 3 906 453 B1

Fig.5

EP 3 906 453 B1

Fig.6a    (Stand der Technik)

Fig.6b

Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 402009005121
- US 20160297522 A1
- US 20170108857 A1
- US 20180356907 A1
- EP 0383663 A1
- US 9898033 B1
- WO 2017125428 A1